# EUROPEAN PATENT APPLICATION

(11) **EP 1 078 846 A1**
(43) Date of publication of application: **28.02.2001**
(21) Application number: 99830537.9
(22) Date of filing: 27.08.1999
(51) Int. Cl.: B62J 1/02

(54) **Method for manufacturing a suspension for bicycle saddles and suspension thus obtained**

(71) Applicant: ISCA S.p.A, 36028 Rossano Veneto (Vicenza) (IT)
(72) Inventor: Bernardi, Marco Lino, 36028 Rossano Veneto (Vicenza) (IT)
(74) Representative: Lanzoni, Luciano

(57) **Abstract**

The present invention relates to a method for manufacturing a suspension for bicycle saddles and a suspension obtained by means of this method. In particular, the method comprises the steps of: introducing an elastomer material (5) inside a closed chamber (8) which has an annular configuration and is defined by joining together a receiving mould (6) and a counter-mould (7); solidification of the elastomer material (5) and consequent forming of a substantially tubular part (16) which is counter-shaped with respect to the closed chamber (8); opening of the closed chamber (8) and subsequent extraction of the substantially tubular part (16) from the receiving mould (6); insertion of a spring (19) inside the substantially tubular part (16); mounting of the spring (19) and the tubular part (16) between the shell (3) and the support structure (2) of the bicycle. The suspension (1) essentially consists of the spring (19), the substantially tubular part (16) arranged so as to line externally the spring (19) and fixing means (18) for mounting the suspension (1) between the shell (3) and the support structure (2).

## Description

The present invention relates to a method for manufacturing a suspension for bicycle saddles and a suspension obtained by means of this method.

The method in question is advantageously intended to be used in the industrial processes for manufacturing saddles and/or saddles components for bicycles. The suspension formed by means of this method is of the type which is normally used on saddles to dampen the vibrations which may be transmitted to the cyclist owing to the roughness of the ground.

At present, in accordance with the known art, saddles of the more traditional type are fitted with suspensions which are operationally mounted between a support structure connected to the bicycle frame and a rigid or semi-rigid shaped body forming the bottom part of the saddle and referred to by persons skilled in the art as "shell".

Usually, the support structure is formed by a pair of shaped bars which are connected to the front and the rear of the shell and fixed by means of clamps to the saddle mounting tube associated with the bicycle frame. The suspensions are usually mounted in a rear zone of the saddle.

In particular, when the suspensions consist of metal parts such as springs (usually made of music wire), screws, shaped bars, etc, the known methods simply envisage the construction of the individual parts forming the suspension, their subsequent assembly and finally mounting of the group, thus assembled, onto the shell. These known production methods are fairly laborious and in particular do not allow the manufacture of suspensions which have excellent technical and operational characteristics.

Moreover, as is known, the main drawback arising from suspensions which use metal springs lies in the intrinsic danger associated with use thereof.

In fact, the spirals of the springs, during normal operation of the suspension, move towards and away from each other, with the risk of trapping between them cyclist's apparel (such as clothing) and other objects which come into contact with the actual spirals. Moreover, there also exists the danger that the cyclist him/herself may accidentally make contact with the springs (for example with his/her hands) and suffer injury.

In order to overcome these drawbacks, more recently it has become increasingly common to find suspensions which use springs provided with a deformable external protection and suspensions consisting of parts made of elastomer material which may have a helical spring more or less embedded inside them.

As is known, the suspensions which use springs provided with external protection devices, in addition to not allowing improvements in the production process described above, are such that they do not allow an optimum suspension effect to be achieved since both the elastic action and the damping action are basically dependent upon the mechanical response alone of the spring, whereas the external protection acts merely as a safety lining. The suspensions of the known type mentioned above, consisting of elastomer materials which have a spring embedded inside them (as disclosed by Patent Application No. VR98A000062) may cause some problems during the production stage. In fact, these suspensions require methods which use fairly elaborate moulds in order to allow the precise positioning, inside them, of the spring and the fixing means connected thereto.

In particular these methods generally envisage centring operations performed using conical blocks which must be mounted and removed from the fixing parts connected to the spring. Obviously these centring operations are performed for the most part manually and increase the time taken by suspension manufacturing process. It must also be noted that the presence, inside the moulds, of fixing means which generally consist of metal parts, results in problems with regard to sealing of the elastomer material.

In fact, the latter, during an expansion step which takes place, tends to penetrate into the seats which are intended to receive exclusively these metal parts. Since the presence of elastomer material in the abovementioned seats is not envisaged, this may give rise to burrs which require subsequent finishing operations.

Therefore the methods of the known type for the production of suspensions which use elastomer materials are sometimes complex and not without operational difficulties.

Finally it should be noted that the said suspensions consisting solely of elastomer parts (as disclosed by Italian patent No. 1,258,588) do not pose particular problems during the production process, but, in view of the absence of the metal spring, are unable to provide an optimum mechanical response.

The main object of the present invention is therefore that of overcoming the drawbacks associated with the methods of the known type, by providing a new method for manufacturing a suspension for bicycle saddles, which does not pose the production difficulties associated with insertion of metal parts inside the mould.

A further object of the present invention is that of providing a method which does not require the use of centring parts to be inserted inside the mould. A further object of the present invention is that of providing a method which is simple, low-cost and operationally entirely reliable.

Another object of the present invention is that of providing a suspension which allows an optimum mechanical response and at the same time an additional damping effect to be achieved.

Finally, a further object of the present invention is that of providing a suspension which does not involve any risks from a safety point of view.

The technical characteristics of the invention, in accordance with the abovementioned objects, may be clearly understood from the contents of the claims indicated below and the advantages thereof will become obvious from the detailed description which follows, provided with reference to the accompanying drawings which show a purely exemplary and non-limiting embodiment thereof and in which:
- Figure 1 shows a rear schematic view of the suspension obtained by means of the method according to the present invention and mounted on a bicycle saddle;
- Figure 2 shows a cross-sectional side view of the saddle along the line II-II of Fig. 1;
- Figure 3 shows a cross-sectional rear view of the saddle according to Fig. 1 along the line III-III of Fig. 2;
- Figure 4 illustrates schematically the step of introducing an elastomer material inside a receiving mould;
- Figure 5 illustrates schematically the step of closing a counter-mould on the receiving mould;
- Figure 6 illustrates schematically the step of expansion of the elastomer material inside a closed chamber defined by the mould and the counter-mould;
- Figure 7 illustrates schematically the step of separation of the mould from the counter-mould by means of raising of the counter-mould;
- Figures 8 illustrates schematically the step of extraction of the tubular part (viewed laterally) fron the receiving mould;
- Figure 9 illustrates schematically the step of inserting a spring and a pin inside the tubular part;
- Figure 10 shows an axially sectioned schematic view of the suspension obtained by means of the method in question;
- Figure 11 illustrates schematically a step involving injection of an elastomer material inside a closed chamber defined by the mould and by the counter-mould in accordance with a variation of the method in question. In accordance with the figures of the acompanying drawings, 1 denotes in its entirety the suspension for bicycle saddles obtained using the method according to the present invention.

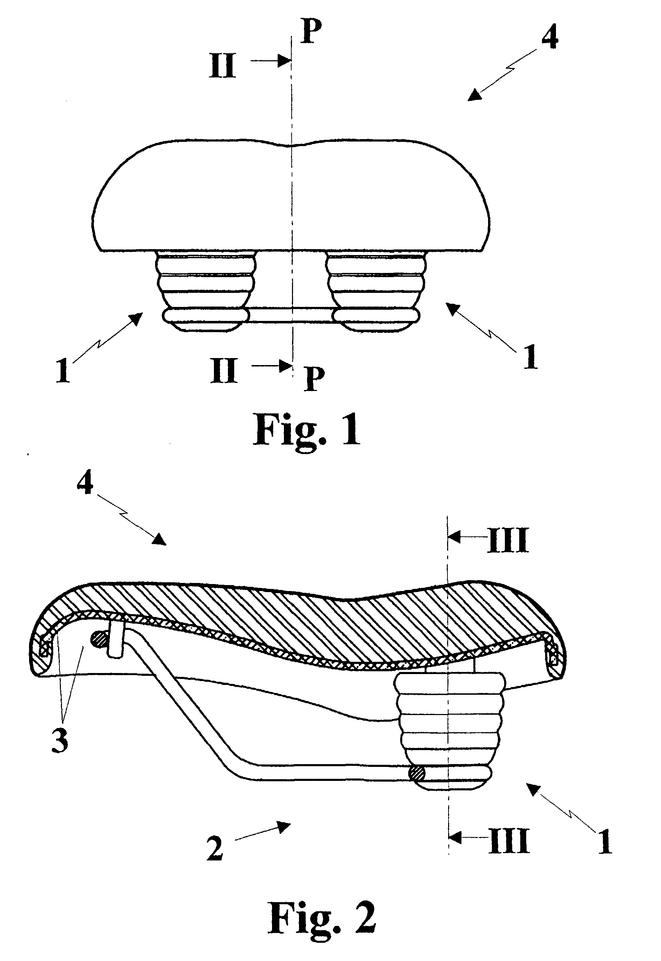

With particular reference to Figures 1 to 3, the suspension 1 is conventionally mounted between a support structure 2 connected to a bicycle frame, not shown, and a shaped body 3 forming the bottom part of a saddle 4 and referred to by persons skilled in the art as "shell". In particular, the shaped body 3 may be of the rigid or semi-rigid type.

The method in question may envisage some variations with respect to the type of material used for manufacture of the damping device of the suspension 1.

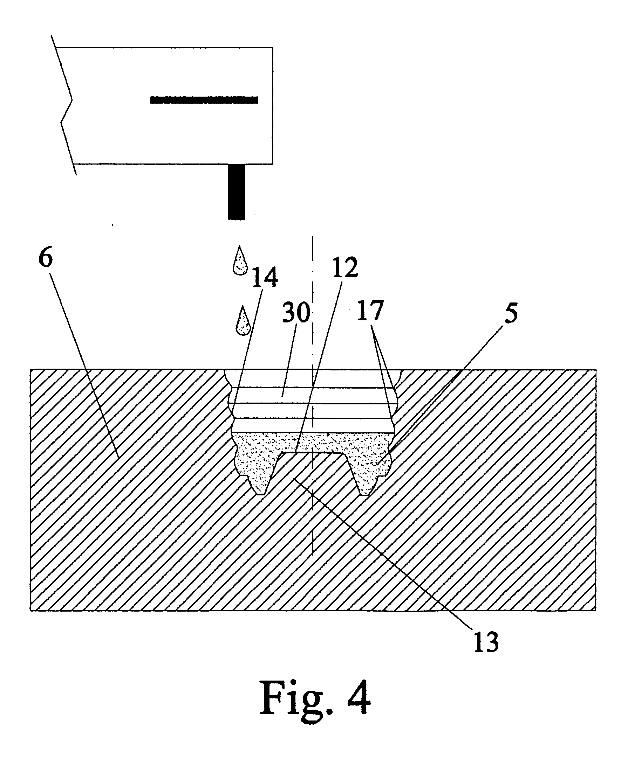

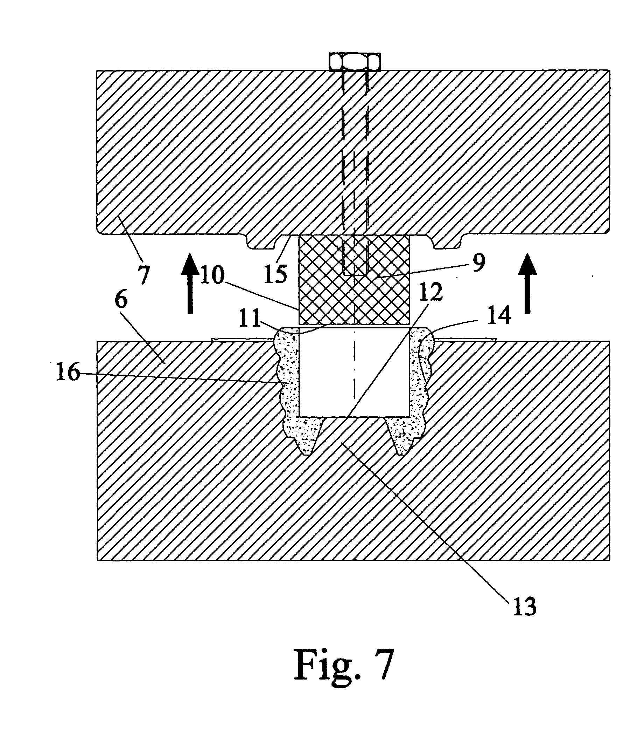

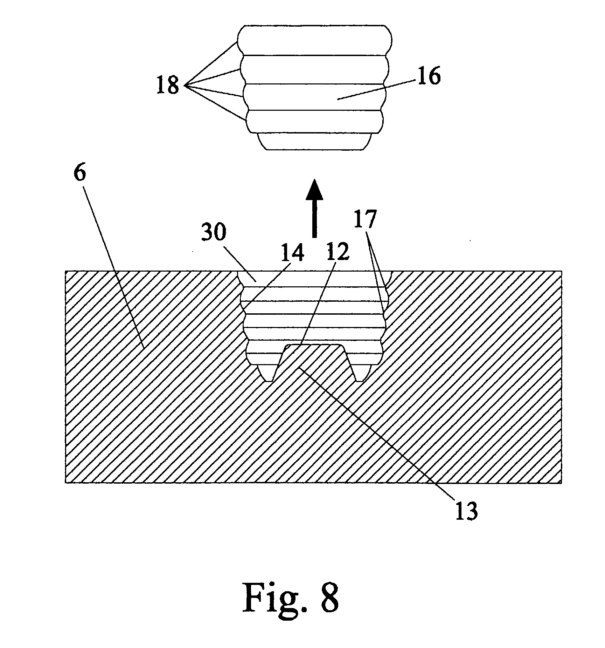

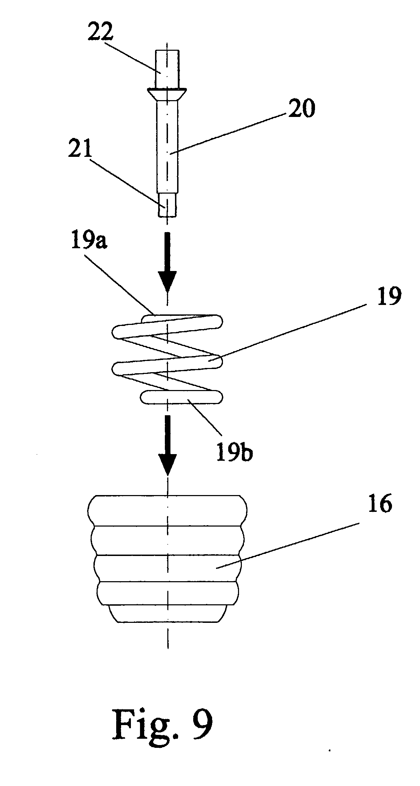

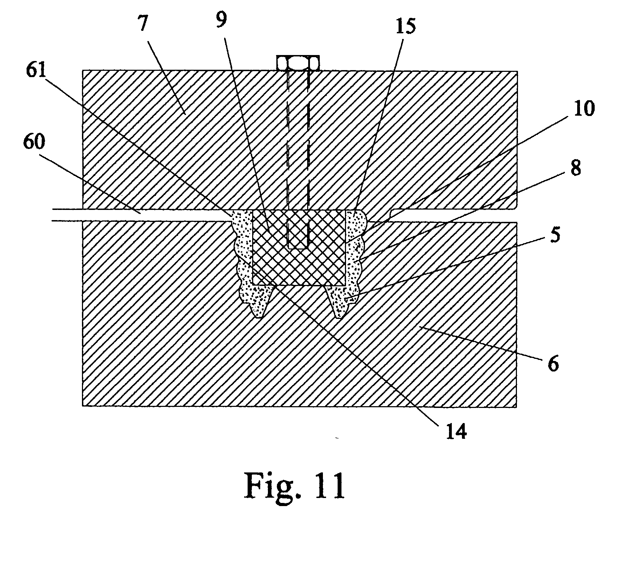

More specifically, in accordance with a preferred method of implementation, the abovementioned method comprises, in the case where an expandable elastomer material is used, the operating steps which are described hereinbelow with reference to the sequence shown in Figures 4 to 10, while it comprises, in a possible variation and in the case where a non-expandable elastomer material is used, the operating steps described with reference to the sequence shown in Figures 7 to 10 preceded by the step illustrated in Figure 11.

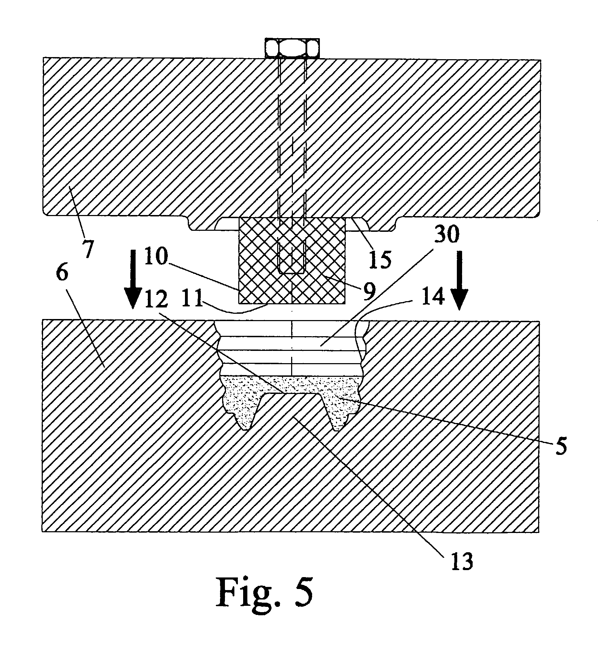

Initially, in accordance with the preferred method of implementation mentioned above, it is envisaged performing a step involving the introduction of an elastomer material 5 by means of casting inside a cavity 30 of a receiving mould 6 (see Fig. 4) and a step involving closing of the latter by means of a counter-mould 7 (see Fig. 5).

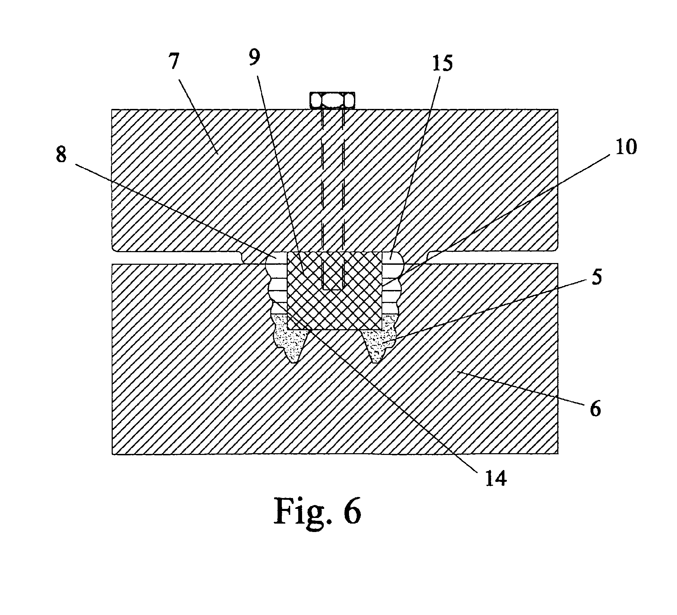

By means of this latter step, the receiving mould 6 and the counter-mould 7 define a closed chamber 8 inside which the elastomer material 5 is inserted (see Fig. 6). The counter-mould 7 is provided with a cylindrical shaped lug 9 which extends from it and has a side surface 10 and a circular bottom surface 11.

During closing of the counter-mould 7, the lug 9 penetrates in a substantially centred manner inside the cavity 30 of the mould 6 (see Fig. 5) until it comes into abutment by means of its bottom surface 11 against a top portion 12 of a projection 13 arranged on the bottom of the mould 6 itself.

In this configuration, the chamber 8 assumes an annular configuration which is defined by the side surface 10 of the lug 9 and by the internal surfaces, respectively 14 and 15, of the receiving mould 6 and the counter-mould 7. At this point, it is envisaged performing an expansion step during which the elastomer material 5, which usually consists of polyurethane, fills the volume of the chamber 8 (see Fig. 6).

Subsequently solidification of the elastomer material 5 takes place inside the chamber 8 with the consequent forming of an expanded tubular part 16 which is counter-shaped with respect to the chamber 8 itself.

Advantageously the expansion and solidification steps take place by means of chemical reaction of the components which form the elastomer material 5.

The internal surface 14 of the mould 6 is provided with a plurality of undercuts 17 which are designed to create, during forming of the tubular part 16, corresponding curvatures 18 on the external surface thereof.

This is then followed by a step involving separation of the mould 6 from the counter-mould 7 and consequent opening of the chamber 8 by means of raising of the counter-mould 7 from the mould 6, and a step involving extraction of the tubular part 16 from the mould 6. The elastomer material 5 which forms the tubular part 16, since it is elastically deformable, allows extraction to be performed relatively easily, despite the presence of the undercuts 17.

Finally, there is the step involving insertion of a steel spring 19 inside the tubular part 16 and subsequent assembly of said spring 19 and said tubular element 16 between the shell 3 of the saddle 4 and the support structure 2.

According to a preferred mode of implementation of the method in question, the lug 9 is connected to the counter-mould 7 by means of a screw/nut screw connection. In this way the lug 9 may be removed from the counter-mould 7.

Obviously it is possible to provide lugs 9 which have different shapes and dimensions so as to form corresponding tubular parts 16 which have different thicknesses and different internal profiles depending on the specific mechanical characteristics which are required for the suspension.

The assembly step is performed by using fixing means 18 which connect the spring 19 to the shell 3 and to the support structure 2.

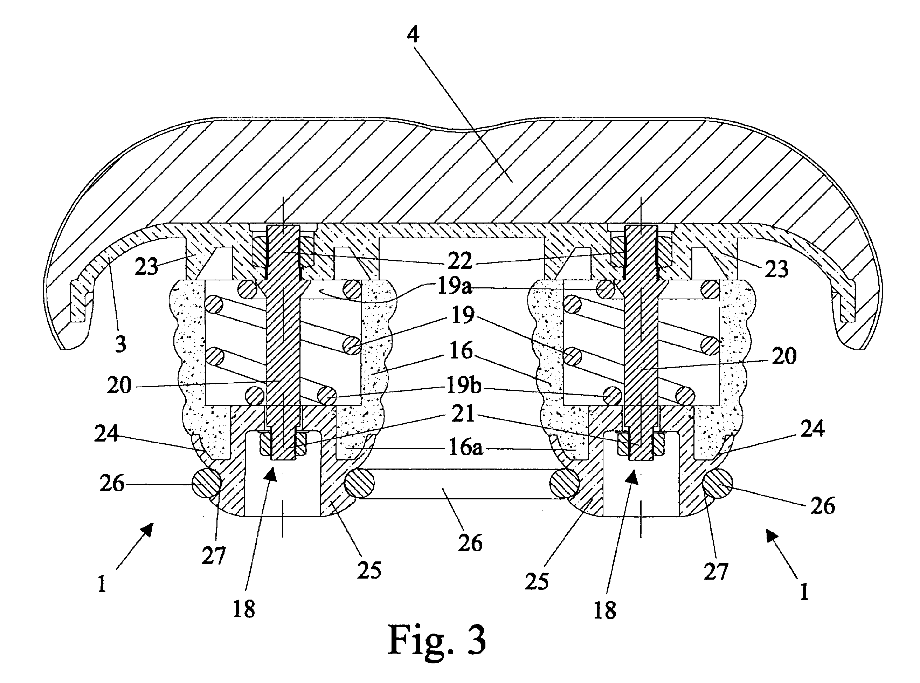

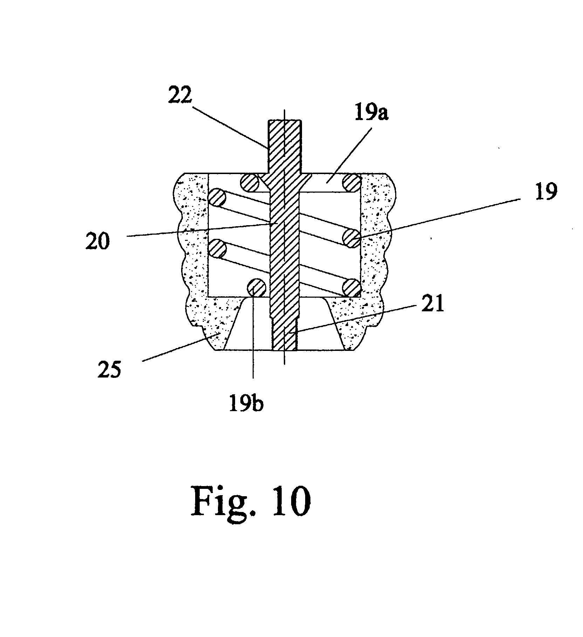

In greater detail, the fixing means 18 comprise a pin 20 which is arranged coaxially inside the tubular element 16 (see Figs. 3 and 10). The pin 20 is connected at a first end 21 to the support structure 2 and at a second end 22 to the shell 3. Both the abovementioned connections are formed by means of connections of the screw/nut screw type (see Fig. 3).

In accordance with the constructional example illustrated in Figure 3 the spring 19 has a first portion 19a which is arranged in contact with a bearing piece 23 forming one piece with the shell 3 and second portion 19b arranged in contact with the support structure 2.

More particularly, in order to connect the tubular part 16 to the support structure 2, a seat 24 is provided on a connecting part 25 integral with the support structure 2 (see Fig. 3). The connecting part 25 is intended to receive a bottom portion 16a of the tubular part 16.

The support structure 2 also comprises a metal frame 26 which is fixed to an annular seat 27 provided on the connecting part 25 so as to allow connection between the suspension 1 and the bicycle frame.

In accordance with a variation of implementation of the method in question mentioned above, the introduction of the elastomer material 5 inside the closed chamber 8 defined by the receiving mould 6 and by the counter-mould 7 may be performed via an injection duct 60 provided with a discharge aperture 61 connected to the closed chamber 8. In this case the elastomer material 5 is of the non-expandable type and therefore the closed chamber 8 must be filled completely prior to the next step involving solidification of the elastomer material 5.

In accordance with this second constructional example, the material used may advantageously be of the thermoplastic type.

From a functional point of view, the suspension 1 obtained by means of the method according to the present invention is able to absorb, as a result of its elastic deformation, the stresses which are transmitted from the frame to the saddle owing to roughness of the ground. More precisely, the tubular part made of elastomer material performs the dual function of externally lining the spring and damping the elastic oscillations of the spring itself.

It should be noted, finally, that in the constructional example illustrated in the accompanying figures, it is envisaged using two substantially equivalent suspensions arranged in the rear part of the saddle 4 in a symmetrical position with respect to a longitudinal median plane P (see Fig. 1).

The invention thus conceived therefore achieves the predefined objects.

## Claims

1. Method for manufacturing a suspension for bicycle saddles which can be arranged between the shell (3) of a saddle (4) and a support structure (2) connected to the frame of a bicycle, comprising the operating steps of: introducing an elastomer material (5) inside a receiving mould (6) with which a counter-mould (7) is associated, said receiving mould (6) and said counter-mould (7) defining, when joined together, a closed chamber (8) with a substantially annular configuration designed to receive said elastomer material (5); solidification of the elastomer material (5) and consequent forming of a substantially tubular part (16) which is counter-shaped with respect to said closed chamber (8); separation of said receiving mould (6) from said counter-mould (7); insertion of at least one spring (19) inside said substantially tubular part (16); mounting of said spring (19) and said substantially tubular part (16) between said shell (3) and said support structure (2).

2. Method according to Claim 1, characterized in that said step of introducing elastomer material (5) is performed by means of casting, followed by closing of the receiving mould (6) by means of joining together with said counter-mould (7).

3. Method according to Claim 1, characterized in that said material introduced is polyurethane and in that, prior to said solidification step, a step involving expansion of the elastomer material (5) inside the closed chamber (8) is envisaged.

4. Method according to Claim 1, characterized in that said step of introducing an elastomer material (5) is performed by means of thermoplastic injection.

5. Method according to Claim 1, characterized in that said forming of the substantially tubular part (16) is achieved by means of a lug (9) extending from said counter-mould (7) and defining, together with the internal surface (14) of said receiving mould (6), said chamber (8).

6. Method according to Claim 1, characterized in that said forming of the substantially tubular part (16) is achieved by means of a lug (9) extending from said receiving mould (6) and defining, together with the internal surface (15) of said counter-mould (7), said chamber (8).

7. Method according to any one of the preceding claims, characterized in that joining together of said receiving mould (6) and said counter-mould (7) defines an internal surface of said chamber (8), which internal surface is provided with a plurality of undercuts (17) which are designed to create, during forming of said substantially tubular part (16), corresponding curvatures (18) on the external surface of the tubular part (16) itself.

8. Suspension for bicycle saddles, comprising:
- at least one spring (19);
- at least one tubular part (16) made of elastomer material (5) and arranged so as to form an external lining of said spring (19) for damping elastic oscillations of the spring itself;
- fixing means (18) for mounting said suspension (1) between the shell (3) of the saddle (4) and a support structure (2).

9. Suspension according to Claim 8, characterized in that said fixing means (18) comprise at least one pin (29) which is arranged inside said substantially tubular part (16) and is connected at a first end (21) to said support structure (2) and at a second end (22) to said shell (3).

10. Suspension according to Claims 8 or 9, characterized in that said spring (19) has at least a first portion (19a) which is arranged in contact with said shell (3) and a second portion (19b) which is arranged in contact with said support structure (2).

11. Suspension according to any one of Claims 8 to 10, characterized in that said tubular part (16) has a bottom portion (16a) which is inserted inside a seat (24) formed on a connecting part (25) integral with said support structure (2) for connecting said tubular part (16) to the support structure (2) itself.

12. Suspension according to Claim 11, characterized in that said support structure (2) comprises a metal frame (26) fixed to an annular seat (27) formed on said connecting part (25) for connecting the suspension (1) to the frame of a bicycle.

13. Suspension for bicycle saddles manufactured in accordance with the method according to Claim 1.
